# EUROPÄISCHE PATENTSCHRIFT

(11) **EP 0 713 791 B1**
(45) Veröffentlichungstag und Bekanntmachung des Hinweises auf die Patenterteilung: **27.01.1999**
(21) Anmeldenummer: 95118110.6
(22) Anmeldetag: 17.11.1995
(51) Int. Cl.: B60G 21/05

(54) **Kraftfahrzeug-Hinterachse und Verfahren zu ihrer Herstellung**
Motor vehicle rear axle and method of making it
Essieu arrière de véhicule automobile et son procédé de fabrication

(30) Priorität: 25.11.1994 DE 4441971
(43) Veröffentlichungstag der Anmeldung: 29.05.1996
(73) Patentinhaber: VAW Aluminium AG, D-53117 Bonn (DE); THYSSEN UMFORMTECHNIK GmbH, 33647 Bielefeld (DE)
(72) Erfinder: Bungarten, Dieter, Dipl.-Ing., D-53577 Neustadt (DE); Ebert, Jörg, Dr. Ing., D-50858 Köln (DE); Elsner, Olaf, Dipl.-Ing., D-53117 Bonn (DE); Hellenkamp, Michael, Dipl.-Ing., D-50389 Wesseling (DE); Linden, Herbert, Dipl.-Ing., D-53913 Swisttal (DE); Söllner, Gerhardt, Dipl.-Ing., D-53757 St. Augustin (DE); Steimmel, Franz, Dipl.-Ing., D-53604 Bad Honnef (DE); Von Zengen, Karl-Heinz, Dipl.-Ing., D-53119 Bonn (DE); Hasenpatt, Walther, Dipl.-Ing., D-49525 Lengerich (DE); Harbig, Peter, Dipl.-Ing., D-33842 Werther (DE); Jentsch, Kai-Uwe, Dipl.-Ing., D-47447 Moers (DE); Löwen, Joachim, Dr., D-33739 Bielefeld (DE)
(74) Vertreter: Müller-Wolff, Thomas, Dipl.-Ing.

(56) Entgegenhaltungen:
- EP-A- 0 548 859
- DE-A- 4 330 192
- US-A- 4 842 298

## Beschreibung

Die Erfindung betrifft ein Kraftfahrzeug-Hinterachse des Verbundlenkerachs-Typs, mit jeweils an ihrem hinteren Ende einen Radträger aufweisenden Längslenker 2 hoher Biege- und Torsionssteifigkeit, sowie mit einer biegesteifen, für Torsionsbeanspruchungen jedoch nachgiebigen Querstrebe 3 aus einem, die Lage des Schubmittelpunktes verändernden Profilquerschnitt und ein Verfahren zu ihrer Herstellung.

Kraftfahrzeug-Hinterachsen der eingangs genannten Art sind aus der DE 43 30 192 A1 bekannt. Dort wird ein als U-Profil ausgebildetes Querstrebenprofil derart ausgerichtet bzw. eingebaut, daß der nach schräg oben gerichtete Rücken des U-Profils eine Erhöhung der fiktiven Torsionsachse der Querstrebe bzw. einen entsprechend hoch liegenden Schubmittelpunkt bewirkt. Durch die Verwendung eines derartigen U-Profils sollen eine schweißtechnisch unkomplizierte Bauweise und ein gutes Eigenlenkverhalten durch geringe oder fehlende Übersteuerungstendenzen erreicht werden. Das bekannte U-Profil wird aus einem Blech mit gleichbleibenden Wandstärken gebogen. An den Übergängen zu den Längslenkern werden die Schenkel des U-Profils zu einem starren Kastenprofil zusammengeschweißt, wobei die beiden Enden der Querstrebe in die seitlich offenen Längslenker eingeschoben und mit oberen und unteren Blechschalen verbunden werden.

Das in der DE 43 30 192 A1 gezeigte U-Profil der Querstrebe ist nicht wie bisher üblich über die ganze Querstrebenlänge gleichbleibend ausgerichtet, sondern im Bereich zwischen den beiden Längslenkern relativ zu den an den Längslenkern angeschweißten Querstrebenenden um die Querstrebenlängsachse verdrillt oder verdreht und zwar derart, daß die Symmetrieebene des U-Profils im mittleren Querstrebenbereich eine andere Neigung relativ zur Längserstreckung der Längslenker bzw. zur Fahrbahnebene aufweist als in den an den Wandbereichen angeschweißten Endbereichen. Durch die Verdrillung erreicht man die eingangs erwähnte Verlagerung der fiktiven Torsionsachse bzw. des Schubmittelpunktes innerhalb eines engen Bereiches, dargestellt durch die Achsen I und II in Figur 1 der DE 43 30 192 A1.

Für viele Anwendungsfälle ist die Möglichkeit einer begrenzten Verlagerung des Schubmittelpunktes gemäß DE 43 30 192 A1 nicht ausreichend. Hinzu kommt, daß bei den aus Gewichtsgründen erwünschten dünnen Wandstärken des U-Profils die zulässige Beanspruchsungskraft insbesondere bei Wechselbeanspruchung für eine auf herkömmliche Weise hergestellte Querstrebe sehr niedrig anzusetzen ist, weil bei der verdrillten Anordnung der Querstrebenenden große Deformationen und bei Überbeanspruchungen sogar Risse auf der Oberfläche der Querstreben auftreten können und somit die Gefahr eines Bruchs der Kraftfahrzeug-Hinterachse vergrößert wird.

Aufgabe der vorliegenden Erfindung ist es daher bei einer Kraftfahrzeug-Hinterachse der eingangs genannten Art eine möglichst große Variabilität in der Anordnung der Torsionsachse bzw. des Schubmittelpunktes und damit eine weitgehend unabhängige konstruktive Gestaltungsmöglichkeit für das Eigenlenkverhalten zu ermöglichen und gleichzeitig eine Erhöhung der zulässigen Beanspruchungskraft insbesondere bei Wechselbeanspruchung bei günstigen Gewichts-Wandstärkeverhältnissen zu ermöglichen.

Diese Aufgabe wird erfindungsgemäß durch die Merkmale des Anspruchs 1 gelöst. Ein vorteilhaftes Verfahren zur Herstellung der erfindungsgemäßen Kraftfahrzeug-Hinterachse ist durch die Merkmale des Verfahrensanspruches gekennzeichnet.

Anhand von umfangreichen Versuchen wurde festgestellt, daß die Verwendung eines Aluminium-Strangpreßprofils für die Herstellung von Querstreben unter bestimmten Voraussetzungen überraschende Vorteile bietet, die in folgenden Eigenschaften bestehen:
1. eine große Variabilität in der Anordnung von fiktiver Torsionsachse der Querstrebe bzw. des Schubmittelpunktes
2. eine hohe spezifische Beanspruchungskraft relativ zum Gewicht der Verbundlenkerachse
3. eine torsions- und biegesteife Anbindung an die Längsstrebe.

Zu den wichtigsten Voraussetzungen für eine geeignete konstruktive Gestaltung der erfindungsgemäßen Querstrebe zählt, daß sie aus einem Aluminium-Strangpreßprofil mit einem in Querstrebenlängsrichtung verlaufenden Strangpreßgefüge ausgebildet ist. Dadurch wird der bei Torsion auftretenden Wölbkraft entgegengewirkt, so daß trotz großer Deformation des Strangpreßprofils keine Risse durch Überbeanspruchung auftreten können.

In einer Weiterbildung des Erfindungsgedankens weist das Strangpreßprofilgefüge eine zeilige Anordnung von Primärausscheidungen des Typs AlMn, AlMnFe und AlFe auf.

Die Vorteile der erfindungsgemäßen Kraftfahrzeughinterachse lassen sich besonders günstig mit einer Aluminiumlegierung der folgenden Zusammensetzung nutzen:
- Magnesium: 0,4 - 1,4 %
- Silizium: 0,4 - 1,5 %
- Kupfer: 0,01 - 1,0 %
- Eisen: 0,1 - 0,8 %
- Mangan: 0,01 - 1,0 %
- Chrom max.: 0,3 %
- Zircon max.: 0,3 %

Rest Aluminium und herstellungsbedingte Verunreinigungen.

Im folgenden wird die Erfindung anhand mehrerer Ausführungsbeispiele näher erläutert. Es zeigen:
- Figur 1: Erfindungsgemäße Querstrebe mit Doppel-T-Profilquerschnitt;
- Figur 2: Querstrebe aus Doppel-T-Profil mit gerippter Dachfläche;
- Figur 3: Querstrebe aus Doppel-T-Profil mit geschlitzter Dachfläche;
- Figur 4: Querstrebe im V-Profil mit verstärkten Kanten;
- Figur 5: Querstreben aus geschlitzten Rohren mit verschiedenen Anschlüssen für die Längsstrebe;
- Figur 6: Querstrebe mit U-Profil-Querschnitt.

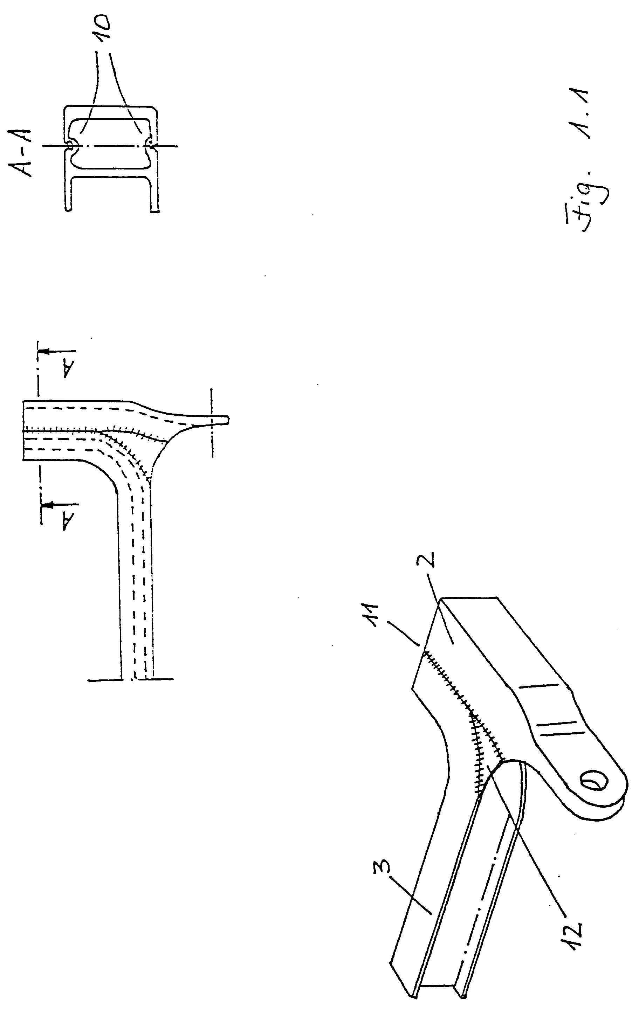

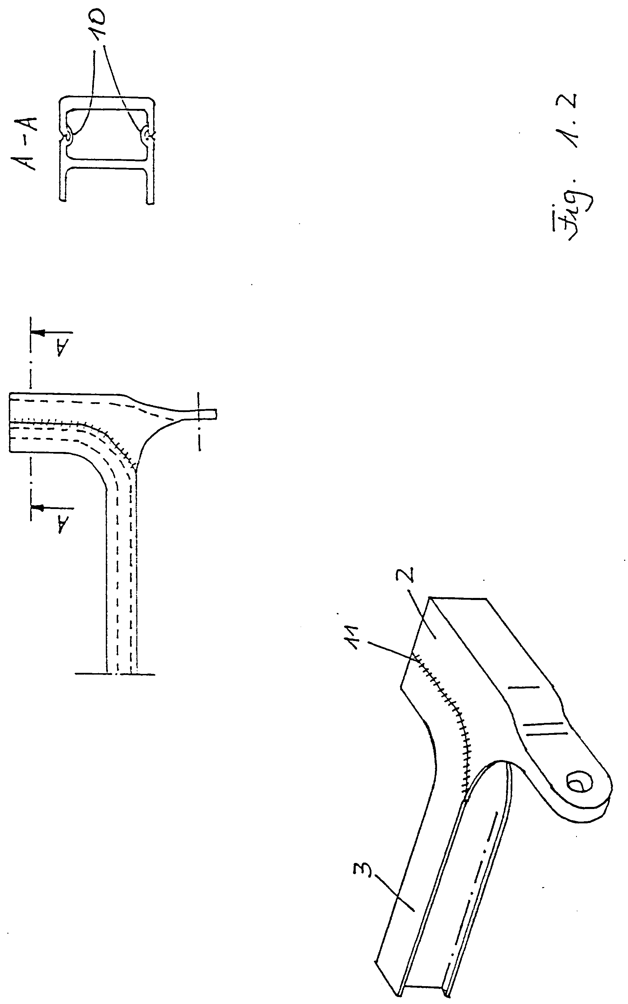

In den Figuren 1.1 bis 1.3 sind erfindungsgemäße Ausbildungen einer Querstrebe 3, bestehend aus einem im Querschnitt gesehenen Doppel-T-förmigen Strangpreßprofil dargestellt. In den Figuren 1.1 und 1.2 sind zwei unterschiedliche Verbindungsmöglichkeiten zu einem im Querschnitt gesehenen U-förmigen Längsträger 2 skizziert, wobei in der Verbindungszone eine Schweißbadstütze 10 ausgebildet ist. In dieser Schweißbadstütze verläuft die Schweißnaht 11, wobei in Figur 1.1 ein Ergänzungsstück 12 zur Angleichung an den Boden der Querstrebe 3 erforderlich ist. In Figur 1.2 kann hierauf verzichtet werden, da die Bogenform aus dem Schenkel des U-Profils 2 geschnitten wird. In Figur 1.3 hat der Längsträger 2 den Querschnitt eines Doppel-T-Profils, so daß hier ähnlich wie in Figur 1.2 die Anpassung an den gebogenen Querträger in der Übergangszone aus dem Dachbereich des Doppel-T-Profils ausgeschnitten werden kann. Von den gezeigten Darstellungen ist die Konstruktion gemäß Figur 1.3 hinsichtlich der Steifigkeit und der Anbindung an den Längslenker am günstigten ausgebildet.

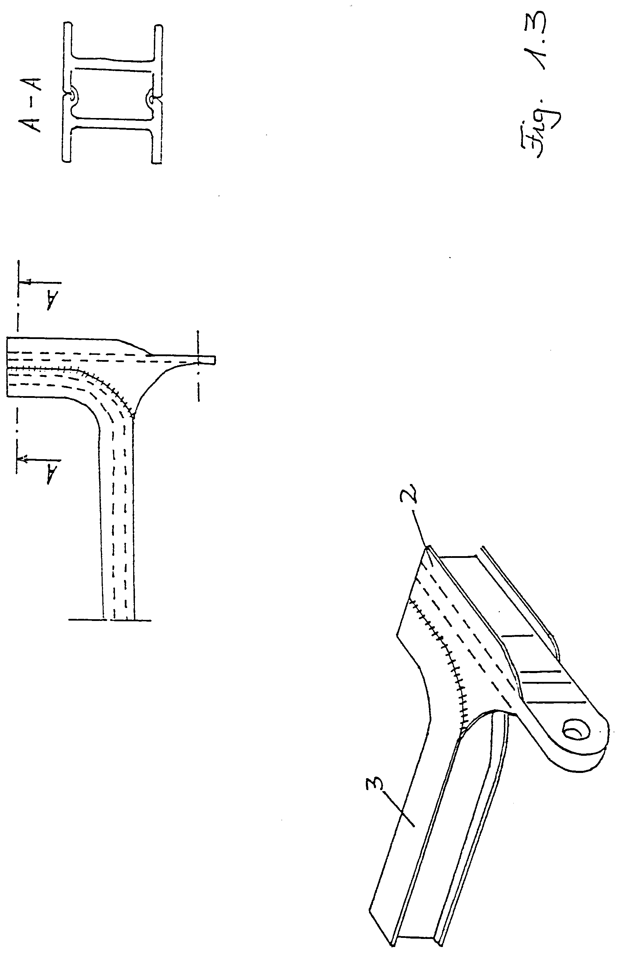

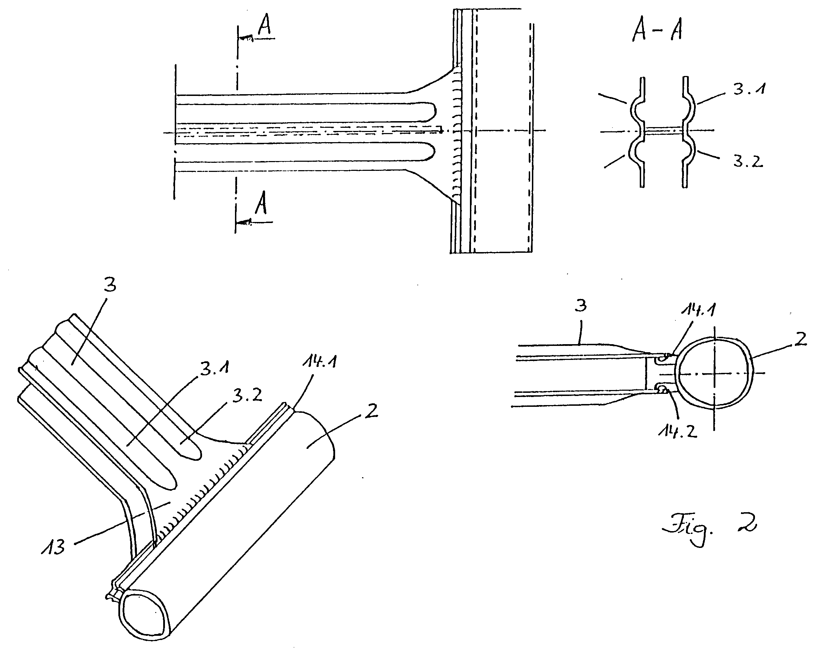

In Fortsetzung des Gedankens einer Doppel-T-Profilstruktur zeigt Figur 2 eine Variante der erfindungsgemäßen Querstrebe 3 in Verbindung mit einem als Rundrohr ausgebildeten Längsträger 2. Das Dach des Doppel-T-Profils ist hier gerippt, wobei die Rippen 3.1 und 3.2 in der Übergangszone zum Längsträger 2 hin abgeplattet sind, so daß eine Verbreiterung 13 entsteht, die eine günstigere Anbindung an den Längslenker ermöglicht. Zur Aufnahme der Abplattung 13 sind an dem Längslenker 2 eine obere und eine untere Schweißbadstütze 14.1, 14.2 in Längsrichtung des Längslenkers 2 angeordnet. Hierdurch kann der Kraftfluß störungsfrei aus der Querstrebe 3 in den Längslenker 2 überführt werden.

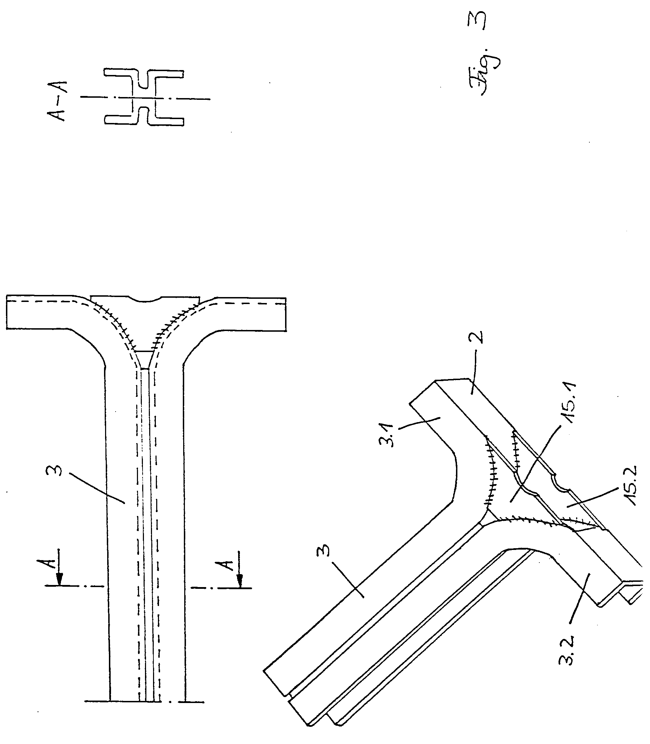

Eine weitere Variante des Doppel-T-Profils der erfindungsgemäßen Querstrebe 3 zeigt Figur 3. Hier ist nämlich der Mittelsteg des erfindungsgemäßen Doppel-T-Profils eingekerbt, so daß nach dem Aufbiegen der Enden 3.1, 3.2 ein Längslenker 2 mit U-Profilquerschnitt entsteht. Zur Versteifung in der Kerbzone wird der Längslenker 2 noch mit dreiecksförmigen Einsatzblechen 15.1, 15.2 verschweißt.

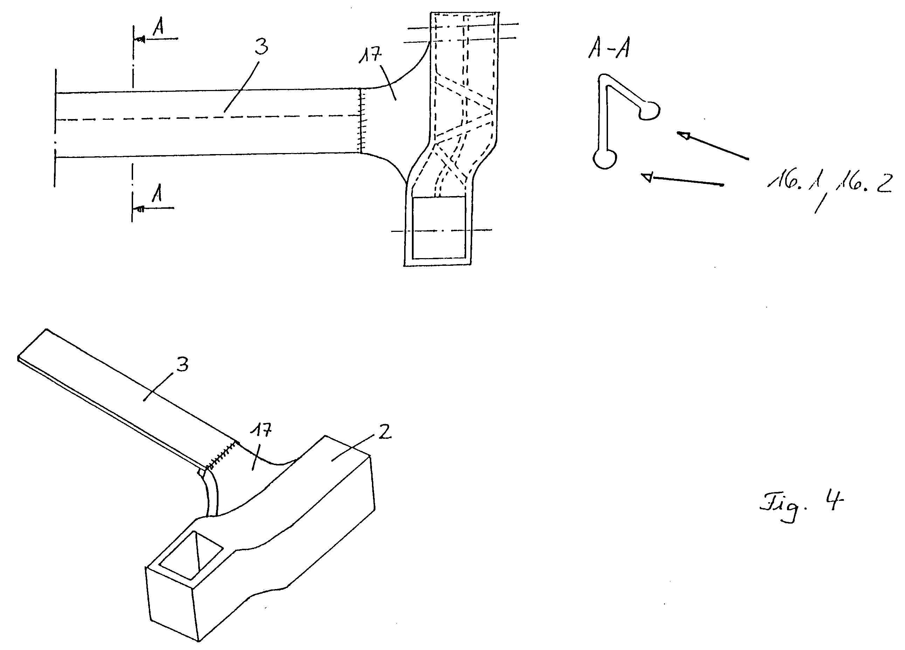

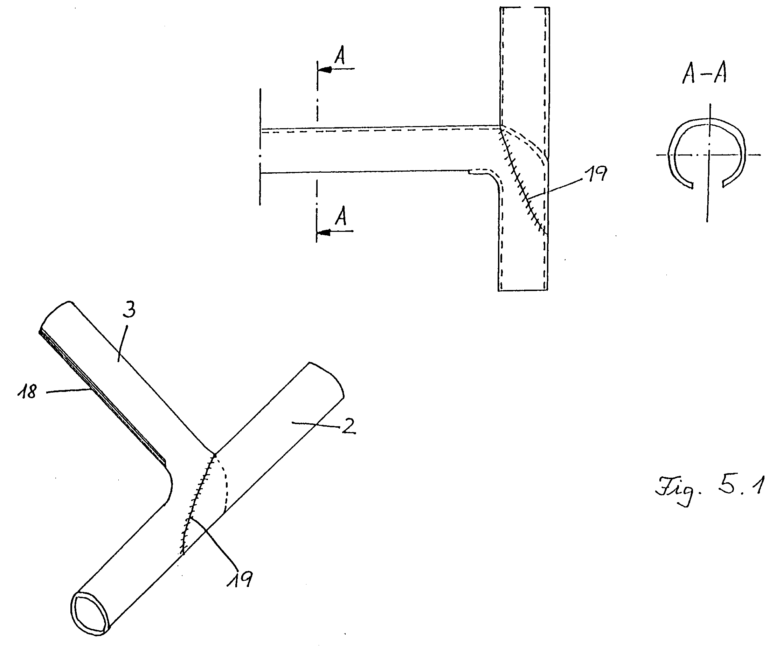

Nach Figur 4 besteht das Strangpreßprofil der Querstrebe 3 aus einem V-förmigen Grundprofil, das an den auslaufenden Enden Verdickungen zur Verlagerung des Schubmittelpunktes aufweist. Die Verdickungen 16.1, 16.2 werden erfindungsgemäß so positioniert, daß der für die jeweilige Konstruktion der Verbundlenkerachse günstigste Schubmittelpunkt erreicht wird. Für die Anbindung an den Längslenker ist ein Gußteilanschluß mit dreiecksförmigem Querschnitt 17 vorgesehen, das den Kraftfluß in einem verripptem Längslenker 2 überleitet. Als Gußteil kann der Längslenker 2 auch einseitig offen ausgebildet werden, was Vorteile bei der Lagerung und Anbindung an den Karosserierahmen bietet.

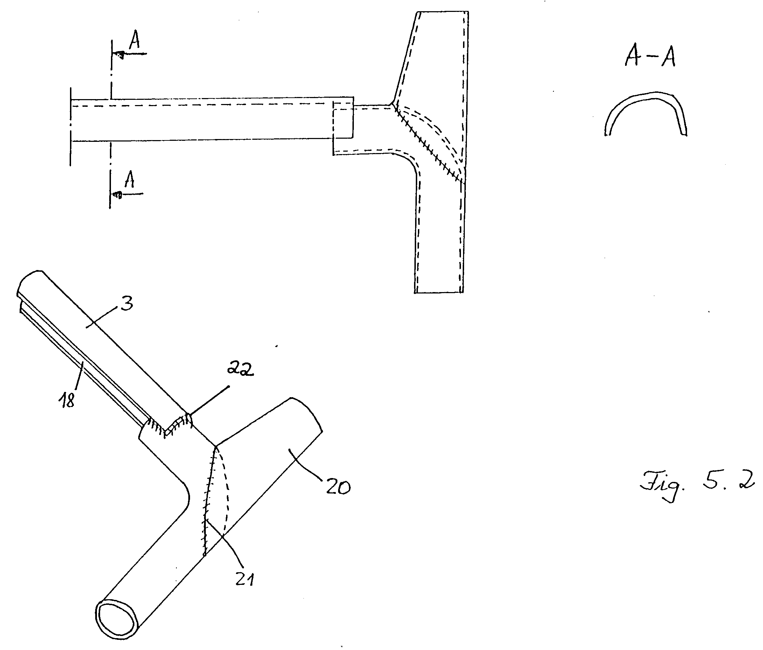

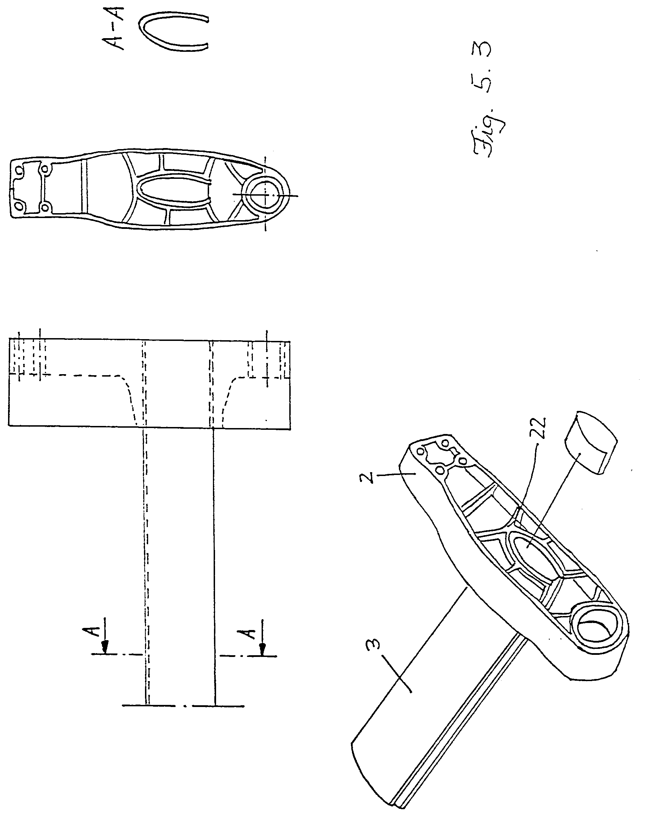

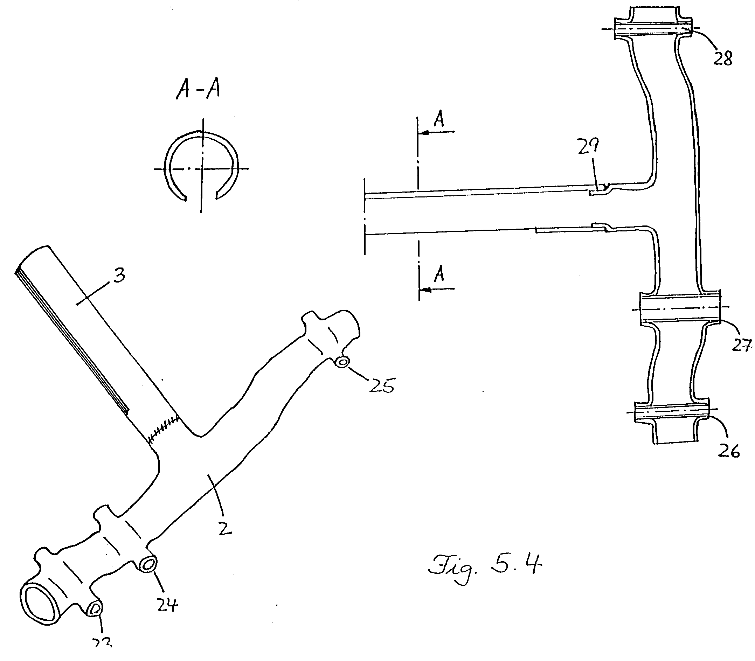

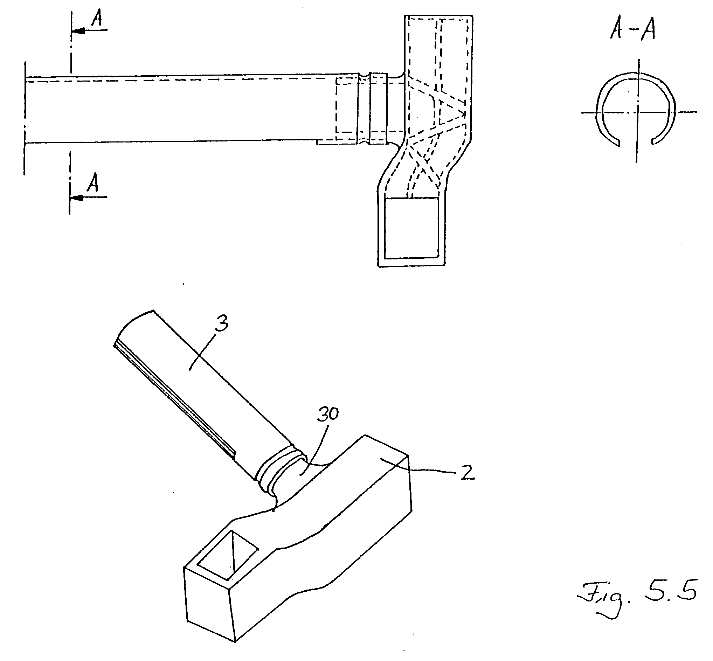

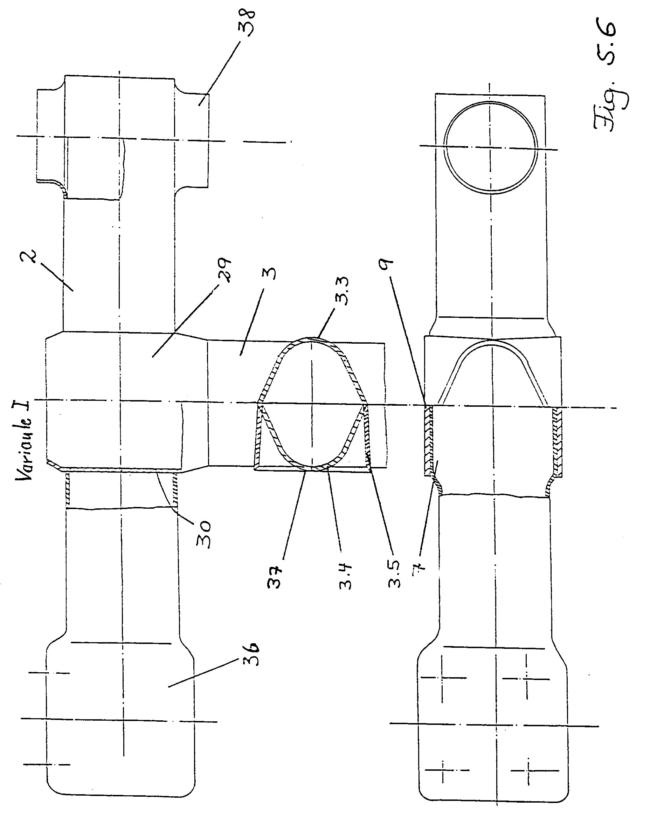

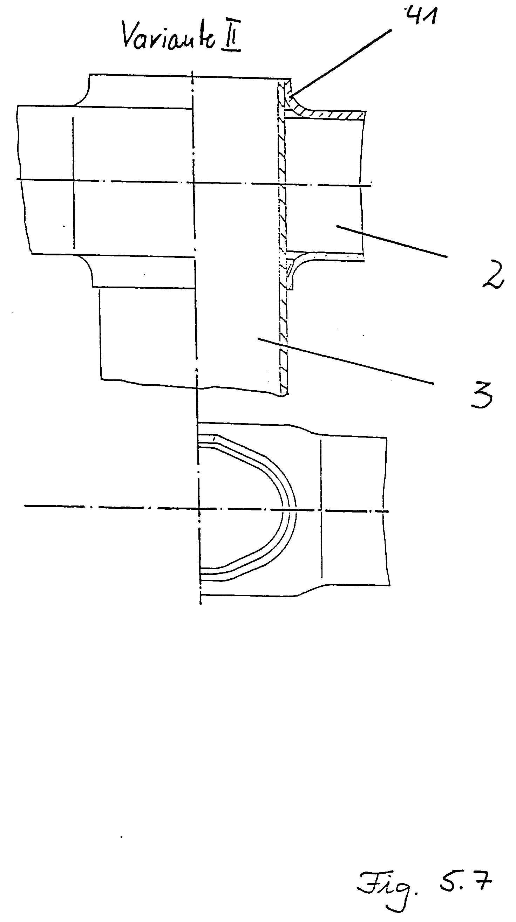

Grundsätzlich ist es auch möglich, Querstrebe 3 und Längslenker 2 aus einem Stück auszubilden. Dies ist in Figur 5.1 dargestellt, wobei die Querstrebe 3 einen Fließendübergang an der Biegung zum Längslenker 2 hin aufweist. Um die Querstrebe 3 torsionsweich zu machen, wurde sie an der Innenseite zur Biegung mit einem Schlitz 18 versehen, der durch mechanische Bearbeitung in das als Strangpreßrohr ausgebildetes Rohrprofil eingeformt ist. Die Längsstrebe wird durch Verschweißung der abgebogenen Querstrebe 3 mit einem rohrförmigen Strangpreßteil 2 gleichen Durchmessers hergestellt, wobei eine Schweißnaht 19 das abgeschrägte Ende des Strangpreßrohres 2 und des entsprechend beschnittenen Rohrbogens der Querstrebe 3 verbindet.

In Figur 5.2 ist analog zu 5.1 die Längsstrebe 2 aus einem Rohrbogen geformt, der mit einem weiteren Strangpreßprofil 20 über eine Schweißnaht 21 verbunden ist. Die Querstrebe 3 kann als Strangpreßteil in Rohrform über eine weitere Schweißnaht 22 verbunden werden, wobei zur Einstellung der Torsionssteifigkeit eine Wandseite mit einem Schlitz 18 versehen ist.

Nach Figur 5. 3 ist die Querstrebe 3 ebenfalls als geschlitztes Rohr, in diesem Fall als Ovalrohr ausgebildet. Die Verbindung zur Längsstrebe 2 hin ist formschlüssig ausgebildet, da die Längsstrebe 2 als verripptes Strangpreßprofil oder Gußteil mit einem, auf die äußere Form der Querstrebe 3 hin abgestimmten Aufnahmeteil 22 versehen ist. Die eigentliche Verbindung kann über Kleben, Schweißen oder durch Schrumpfen erfolgen.

In Figur 5.4 sind die Profilquerschnitte von Querstrebe 3 und Längslenker 2 als Strangpreßprofilquerschnitte mit im wesentlichen runden Ausgangsquerschnitt ausgebildet. Die Besonderheit liegt hier in der Ausformung des Längslenkers 2, der durch Hydroformen aus einem ursprünglich runden Rohrquerschnitt zu einem räumlich gebogenen Achsteil mit mehreren Achsfortsätzen 23, 24, 25 umgeformt wurde. In den Fortsetzen sind Lagerbuchsen 26, 27, 28 eingezogen und durch Hydroformung fixiert. An der Verbindungszone zur Querstrebe 3 hin ist eine Schweißbadstütze 29 ausgebildet, die in das Innere der Querstrebe hineinreicht. Die folgenden Figuren sollen auch andere Verbindungsverfahren zeigen, um eine torsions- und biegesteife Übergangszone zwischen der Querstrebe 3 und dem Längslenker 2 zu bewerkstelligen. Dies geschieht in Figur 5.5 durch die "Magneform" Befestigungstechnik, bei der die rohrförmig ausgebildete Querstrebe 3 über den Stutzen 30 des Längslenkers 2 übergestülpt und dann angepreßt wird, bis eine formschlüssige Verbindung entsteht. Diese Verbindungsart bietet sich besonders bei Längslenkern an, die als Gußteil ausgebildet sind, da es auf eine Maßhaltigkeit der Oberfläche des Stutzens 30 ankommt.

Gemäß Figur 5.6 und 5.7 ist die Querstrebe 3 mit dem Längslenker 2 durch Hydroformen verbunden. Hierzu wird ein zunächst geschlossenes Profil der Querstrebe 3 mit den Querschnittsausprägungen 3.3, 3.4, 3.5 durch Hydroformen am Ende zu einem Kopfteil 29 aufgeweitet und mit einer rechteckigen Aussparung 30 versehen. Die Aussparung kann durch Fräsen oder Stanzen passgenau ausgeführt werden, so daß der Längslenker 2 formschlüssig hineingesteckt werden kann (Variante I).

In einem weiteren Hydroformprozeß werden die Ausformung 36 und die Verbindungszone 38 an den Endpunkten des Längslenkers durch Aufweiten erzeugt, so daß hieraus eine Radträgerplatte oder eine Aufnahmevorrichtung für das Gummigelenk entstehen kann. Somit werden die Anbindungsmöglichkeiten an die Karosserie bzw. an den Radträger wesentlich vereinfacht.

Die formschlüssige Verbindung zwischen der Querstrebe 3 und dem Längslenker 2 kann durch eine Quetschverbindung 7 im Kopfteil 29 noch verbessert werden. Weiterhin lassen sich in der Fügezone Klebstoffe einbringen, so daß auch ein Stoffschluß erreicht werden kann. Alternativ sind mechanische Fügeverfahren wie z.B. Clinchen bzw. Durchsetzfügen oder auch thermische Verfahren wie z.B. Schweißen einsetzbar.

Nach der Montage wird die Querstrebe 3 zur Minderung der Torsionssteifigkeit geschlitzt. Die Schlitzebene ist mit 37 angedeutet.

Selbstverständlich ist auch eine umgekehrte Befestigungsart zwischen Querstrebe 3 und Längslenker 2 möglich (siehe Fig. 5.7). Hierbei würde die Querstrebe nicht am Ende verformt, sondern der Längslenker 2 mit den Aussparungen bzw. Aufweitungen 41 versehen, in die hinein die Querstrebe 3 eingesteckt und durch Hydroforming verbunden wird. Auch hier sind ergänzende Fügemöglichkeiten durch Schweißen, Kleben oder Clinchen anwendbar. Eine mechanische Verbindung kann zusätzlich dadurch erzielt werden, daß die Querstrebe im eingesteckten Zustand durch Hydroverformung in der Verbindungszone aufgeweitet wird (Variante II).

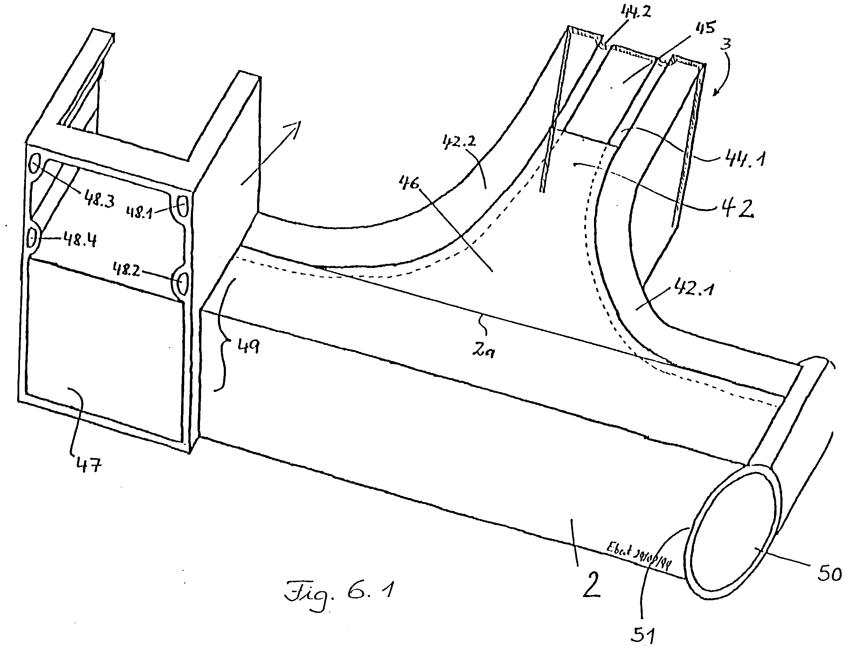

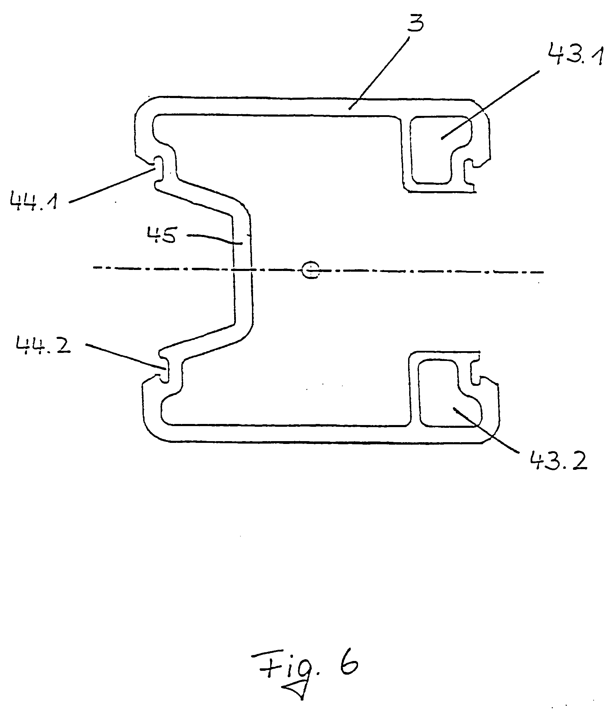

In einer Weiterbildung des Erfindungsgedankens sind zur Verlagerung des Schubmittelpunktes und Beeinflussung der Torsionssteifigkeit an den offenen Enden der Querstrebe 3 Hohlkammern 43.1 und 43.2 ausgebildet. Ein derartiges Strangpreßprofil ist in Figur 6 dargestellt. Durch Verschiebung oder Querschnittsänderung der Hohlkammern erreicht man eine Verlagerung des Schubmittelpunktes ohne daß das Profil gleichzeitig in seiner Biegefestigkeit oder in seinen Torsionseigenschaften wesentlich verändert wird. Dies erlaubt eine weitgehend voneinander unabhängige Wahl von Torsionssteifigkeit und Biegesteifigkeit.

Die Enden 42.1, 42.2 des Profils 42 lassen sich nach der Entfernung eines Verbindungsstückes 45, das zwischen den Schweißbadstützen 44.1, 44.2 angeordnet ist, leicht nach außen aufbiegen (siehe Fig. 6.1). Die an den aufgebogenen Enden 42.1, 42.2 verbliebenen Schweißbadstützen 44.1, 44.2 werden in das U-förmige Längslenkerprofil 2 eingeschoben und dort verschweißt. Die zwischen den Enden 42.1 und 42.2 bzw. der Außenkante des U-förmigen Längslenkerprofils 2a entstehende Öffnung wird durch ein Zwickelprofil 46 oder durch ein entsprechend geformtes Blech vorzugsweise durch thermisches Fügen verschlossen.

Durch Verwendung eines U-förmig verformten beschnittenen Bleches als Längslenker 2 kann auch eine entsprechende stumpf geschweißte Anbindung des mit der Querstrebe 3 verbundenen Profils 42 mittels Schweißbadstützen 44.1, 44.2 erfolgen.

Wie üblich sind am Längslenker 2 die Anschlußflansche für eine Anbindung an der Karosserieseite und an der Radachse vorbereitet. In Figur 6.1 ist eine Radträgerplatte 47 an einem Ende des Längslenkers 2 dargestellt. Die Radträgerplatte 47 besteht aus einem in Pfeilrichtung gepreßten Strangpreßprofil, wodurch in besonders vorteilhafter Weise Befestigungskanäle 48.1 - 48.4 für das Festschrauben der Achsträgerplatte (nicht dargestellt) vorbereitet werden können. Der Längslenker 2 ist in einer Aussparung 49 des Strangpreßprofils eingesetzt und dort auch fest verschweißt.

Am anderen Ende des Längslenkers 2 ist ein Rohranschluß 50 für die Aufnahme eines Gummigelenkes angeordnet. Das Rohranschlußstück wird mit dem Längslenker 2 ebenfalls über eine Schweißnaht verbunden, wobei vorzugsweise eine halbrunde Aussparung 51 für die sichere Fixierung vorbereitet ist.

## Patentansprüche

1. Kraftfahrzeug-Hinterachse des Verbundlenkerachs-Typs mit jeweils an ihrem hinteren Ende einen Radträger aufweisende Längslenker (2) hoher Biege- und Torsionssteifigkeit, sowie einer biegesteifen, für Torsionsbeanspruchungen jedoch nachgiebigen Querstrebe (3) aus einem, die Lage des Schubmittelpunktes verändernden Profilquerschnitt,
dadurch gekennzeichnet,
daß die Querstrebe (3) aus einem Aluminiumstrangpreßprofil mit einem in Querstrebenlängsrichtung verlaufenden Strangpreßgefüge besteht und
daß zur Gestaltung des Eigenlenkverhaltens und Erhöhung der zulässigen Beanspruchungskraft die Querstrebe entweder als Doppel-T-Profil, als Hohlprofil oder als U- bzw. V-Profil ausgebildet ist, an dessen Enden Hohlkammern oder Verdickungen angeformt sind.

2. Kraftfahrzeug-Hinterachse nach Anspruch 1,
dadurch gekennzeichnet,
daß das Strangpreßgefüge eine zeilige Anordnung von Primärausscheidungen des Typs AlMn, AlMnFe und AlFe aufweist.

3. Kraftfahrzeug-Hinterachse nach einem der vorhergehenden Ansprüche,
dadurch gekennzeichnet,
daß das Aluminiumstrangpreßprofil aus einer Aluminiumlegierung mit folgender Zusammensetzung besteht:
Magnesium 0,4 - 1,4 %
Silizium 0,4 - 1,5 %
Kupfer 0,01 - 1,0 %
Eisen 0,1 - 0,8 %
Mangan 0,01 - 1,0 %
Chrom max. 0,3 %
Zircon max. 0,3 %
Rest Aluminium und herstellungsbedingte Verunreinigungen.

4. Kraftfahrzeug-Hinterachse nach einem der vorhergehenden Ansprüche,
dadurch gekennzeichnet,
daß der Profilquerschnitt der Querstrebe (3) in dem zum Längslenker (2) hin sich erstreckenden Übergangsbereich als geschlossenes Hohlprofil ausgebildet ist, während es in den übrigen Bereichen aus einem offenen Profilquerschnitt besteht, das im Strangpreßverfahren hergestellt wird.

5. Kraftfahrzeug-Hinterachse nach einem der vorhergehenden Ansprüche,
dadurch gekennzeichnet,
daß das geschlossene Hohlprofil der Querstrebe (3) in Längsrichtung geschlitzt ist, wobei die Schlitzbreite zwischen 0,1 - 1 mm liegt.

6. Kraftfahrzeug-Hinterachse nach einem der vorhergehenden Ansprüche,
dadurch gekennzeichnet,
daß die Dachflächen des die Querstrebe (3) bildenden Doppel-T-Profils gerippt oder gewellt sind, wobei in der Fügezone zum Längslenker hin eine Verbreiterung durch Plattdrücken der Wellen oder Rippen vorgesehen ist, die mit parallel hierzu verlaufenden Längsrippen eines als Rohrprofil ausgebildeten Längslenker verschweißt ist.

7. Kraftfahrzeug-Hinterachse nach einem der vorhergehenden Ansprüche,
dadurch gekennzeichnet,
daß der Längslenker als Gußteil ausgebildet ist mit einer zur Querstrebe hin offenen Profilstruktur, in die die Querstrebe eingesteckt und verschweißt wird.

8. Kraftfahrzeug-Hinterachse nach einem der vorhergehenden Ansprüche,
dadurch gekennzeichnet,
daß der Längslenker aus einem um 90 ° gebogenen Rohrprofil besteht, an dessen einem Ende die Querstrebe überlappend verschweißt ist und an dessen äußerem Bogen in Verlängerung des freien Bogenrohrprofils ein einseitig offenes Strangpreßprofil angeschweißt ist.

9. Kraftfahrzeug-Hinterachse nach einem der vorhergehenden Ansprüche,
dadurch gekennzeichnet,
daß Querstrebe und Längslenker aus ineinandergesteckten Rohren bestehen, wobei die Querstrebe zumindest abschnittsweise geschlitzt ist und in Verlängerung des freien Bogenendes die Längslenker durch ein angeschweißtes Rohr mit schräg zur Rohrachse geführter Fügezone gebildet werden.

10. Verfahren zur Herstellung einer Kraftfahrzeug-Hinterachse des Verbundlenkerachs-Typs unter Verwendung von Quer- und Längslenkern gemäß einem der vorhergehenden Ansprüche,
dadurch gekennzeichnet,
daß der Längslenker (2) durch einen quer zur Längsachse an seinem Ende durchbohrten Querträger durchgesteckt und durch Hydroformen form- und kraftschlüssig verbunden wird.

11. Verfahren nach dem vorhergehenden Anspruch,
dadurch gekennzeichnet,
daß der Querlenker an seinen Enden zunächst durch Hydroforming aufgeweitet und in dem aufgeweiteten Abschnitt mit einer rechteckigen Aussparung versehen wird,
daß in die rechteckige Aussparung der Längslenker (2) eingesteckt und durch Quetschverbindungen mit dem Querträger verbunden wird.

12. Verfahren nach einem der vorhergehenden Ansprüche,
dadurch gekennzeichnet,
daß an den beiden Endpunkten jedes Längslenkers Querschnittsausprägungen durch Hydroforming zur Ausbildung einer Radträgerplatte und zur Aufnahme eines Gummigelenkes ausgeformt werden.

13. Verfahren nach einem der vorhergehenden Ansprüche,
dadurch gekennzeichnet,
daß die Verbindungszonen durch Klebstoffe und/oder Clinchpunkte erzeugt werden.

14. Verfahren nach einem der vorhergehenden Ansprüche,
dadurch gekennzeichnet,
daß der Querträger zur Verlagerung des Schubmittelpunktes und zur Einstellung der Torsionssteifigkeit mit einem Fräswerkzeug geschlitzt wird.

15. Verfahren nach einem der vorhergehenden Ansprüche,
dadurch gekennzeichnet,
daß für die Befestigung von Lager oder Drehpunkten in die Wandungen des Trägers gestülpte Buchsen eingeformt werden.

16. Verfahren nach einem der vorhergehenden Ansprüche,
dadurch gekennzeichnet,
daß in die gestülpten Buchsen Hohlwellen eingezogen und durch Hydroformen fixiert werden.

17. Verfahren nach einem der vorhergehenden Ansprüche,
dadurch gekennzeichnet,
daß an den geschlitzten Enden des Querträgers geschlossene Hohlprofile angeordnet sind zur Verlagerung des Schubmittelpunktes und Beeinflussung der Torsionssteifigkeit.

18. Verfahren nach einem der vorhergehenden Ansprüche,
dadurch gekennzeichnet,
daß die Schweißnähte als Stumpfnähte ausgebildet sind mit einer Badsicherung, wobei die Schweißbadstützen in der Hauptbeanspruchungsrichtung verlaufen und durch Strangpressen an eines der beiden Profile angeformt sind.

19. Verfahren nach einem der vorhergehenden Ansprüche,
dadurch gekennzeichnet,
daß das geschlossene Hohlprofil der Querstrebe (3) durch mechanische Bearbeitung geschlitzt und gleichzeitig an den Kanten verdichtet wird.

20. Verfahren nach einem der vorhergehenden Ansprüche,
dadurch gekennzeichnet,
daß die Enden (42.1, 42.2) eines in die Querstrebe (3) übergehenden U-Profils (42) nach dem Entfernen eines Verbindungsstückes (45) nach außen aufgebogen und mit den integrierten Schweißbadstützen (44.1, 44.2) in ein U-förmiges Längslenkerprofil (2) eingeschoben und verschweißt werden.

21. Verfahren nach einem der vorhergehenden Ansprüche,
dadurch gekennzeichnet,
daß in die zwischen den aufgebogenen Enden (42.1, 42.2) entstehende Lücke ein Zwickelprofil (46) oder ein entsprechend geformtes Blech eingesetzt und mit den Nachbarprofilen thermisch verbunden wird.

22. Verfahren nach einem der vorhergehenden Ansprüche,
dadurch gekennzeichnet,
daß an den offenen Enden der Querstrebe (3) Hohlkammern (43.1 und 43.2) ausgebildet sind, wobei durch Verschiebung oder Querschnittsänderung der Hohlkammern eine Verlagerung des Schubmittelpunktes erfolgt.

## Claims

1. A motor vehicle rear axle of the H-frame type having, at its rear end, a longitudinal steering arm (2) of a high bending stiffness and torsional stiffness which is provided with a wheel carrier, and having a cross link (3) which comprises a certain amount of bending stiffness, but is resilient enough to accommodate torsional loads and which consists of a profile cross-section which changes the position of the shear centre,
characterised in
that the cross link (3) consists of an extruded aluminium profile whose extrusion structure extends in the longitudinal direction of the cross link, and that, for the purpose of determining the intrinsic steering behaviour and increasing the permissible load, the cross link consists either of a double-T profile, a hollow profile or a U- or V-profile whose ends are provided with formed-on hollow chambers or formed-on thickened portions.

2. A motor vehicle rear axle according to claim 1,
characterised in
that the extrusion structure comprises banded primary precipitations of type AlMn, AlMnFe and AlFe.

3. A motor vehicle rear axle according to any one of the preceding claims,
characterised in
that the extruded aluminium profile consists of an aluminium alloy with the following composition:
Magnesium 0.4 - 1.4%
Silicon 0.4 - 1.5%
Copper 0.01 - 1.0%
Iron 0.1 - 0.8%
Manganese 0.01 - 1.0%
Chromium max. 0.3%
Zircon max. 0.3%
the remainder being aluminium and production-related impurities.

4. A motor vehicle rear axle according to any one of the preceding claims,
characterised in
that, in the region of transition extending towards the longitudinal steering arm (2), the profile cross-section of the cross link (3) is formed by a closed hollow profile, whereas, in the remaining regions, it consists of an open profile cross-section produced by extrusion.

5. A motor vehicle rear axle according to any one of the preceding claims,
characterised in
that the closed hollow profile of the cross link (3) is slotted in the longitudinal direction, with the slot width ranging between 0.1 mm and 1 mm.

6. A motor vehicle rear axle according to any one of the preceding claims,
characterised in
that the roof faces of the double-T profile forming the cross link (3) are ribbed or corrugated and that in the joining zone extending towards the longitudinal steering arm, there is produced a widened region by flattening the corrugations or ribs, which widened region is welded to longitudinal ribs of a longitudinal steering arm in the form of a tubular profile, which longitudinal ribs extend parallel to said widened region.

7. A motor vehicle rear axle according to any one of the preceding claims,
characterised in
that the longitudinal steering arm is provided in the form of a cast component with a profile shape which is open towards the cross link and into which the cross link is inserted and then welded thereto.

8. A motor vehicle rear axle according to any one of the preceding claims,
characterised in
that the longitudinal steering arm consists of a tubular profile which is bent by 90°, with the cross link being overlappingly welded to one end of said tubular profile and with the outer arch of the latter being welded to an extruded profile which is open at one end, for the purpose of increasing the length of the free arched tubular profile.

9. A motor vehicle rear axle according to any one of the preceding claims,
characterised in
that the cross link and the longitudinal steering arm consist of tubes inserted into one another, with the cross link being slotted at least in certain portions and that, for the purpose of increasing the length of the free arch end, the longitudinal steering arms are formed by a welded-on tube whose joining zone is inclined relative to the tube axis.

10. A method of producing a motor vehicle rear axle of the H-frame type, making use of cross links and longitudinal steering arms according to any one of the preceding claims,
charcterised in
that the longitudinal steering arm (2) is passed through a transverse carrier which is bored through at its end transversely to the longitudinal axis and is connected by hydro-forming in a form-fitting and force-locking way.

11. A method according to the preceding claim,
charcterised in
that the transverse steering arm is first expanded at its ends by hydro-forming, with a rectangular recess being provided in the expanded portion, and that the longitudinal steering arm (2) is inserted into said rectangular recess and connected to the transverse carrier by means of crushed connections.

12. A method according to any one of the preceding claims,
characterised in
that at the two end points of each longitudinal steering arm, there are produced cross-section formations by hydro-forming, for the purpose of forming a wheel carrier plate and for receiving a rubber joint.

13. A method according to any one of the preceding claims,
characterised in
that the connecting zones are produced by adhesives and/or clinch points.

14. A method according to any one of the preceding claims,
characterised in
that for the purpose of displacing the shear centre and for setting the torsional stiffness, the transverse carrier is slotted by a milling tool.

15. A method according to any one of the preceding claims,
characterised in
that for the purpose of fixing bearings or pivot points, reverse-drawn bushes are formed into the walls of the carrier.

16. A method according to any one of the preceding claims,
characterised in
that hollow shafts are drawn into the reverse-drawn bushes and fixed by hydro-forming.

17. A method according to any one of the preceding claims,
characterised in
that for the purpose of displacing the shear centre and for influencing the torsional stiffness, closed hollow profiles are arranged at the slotted ends of the transverse carrier.

18. A method according to any one of the preceding claims,
characterised in
that the welds are butt welds with weld pool supports, with the weld pool supports extending in the main load direction and being formed on to one of the two profiles by extrusion.

19. A method according to any one of the preceding claims,
characterised in
that the closed hollow profile of the cross link (3) is slotted by a machining operation while being simultaneously compacted at the edges.

20. A method according to any one of the preceding claims,
characterised in
that, after removal of a connecting piece (45), the ends (42.1, 42.2) of a U-profile changing into the cross link (3) are bent open outwardly and, together with the integrated weld pool supports, are slid into a U-shaped longitudinal steering arm profile (2) and welded thereto.

21. A method according to any one of the preceding claims,
characterised in
that a gusset-type profile (46) or a correspondingly shaped plate is inserted into the gap occurring between the bent-open ends (42.1, 42.2) and thermally connected to the adjoining profiles.

22. A method according to any one of the preceding claims,
characterised in
that hollow chambers (43.1 and 43.2) are formed on at the open ends of the cross link(3), with a displacement of, or change in the cross-section of, the hollow chambers resulting in a displacement of the shear centre.

## Revendications

1. Essieu arrière pour véhicule automobile, du type à bras articulé composite, ayant chaque fois à son extrémité arrière un bras oscillant longitudinal (2) présentant un support de roue, présentant une rigidité en flexion et en torsion, ainsi qu'une barre transversale (3) rigide en flexion, cependant déformable pour des sollicitations en torsion, constitué d'une section transversale de profilé modifiant la position du centre de poussée, caractérisé en ce que la barre transversale (3) est constituée d'un profilé d'extrusion en aluminium ayant une structure d'extrusion orientée dans la direction longitudinale de la barre transversale, et en ce que, pour façonner le comportement en direction propre de la force de sollicitation admissible, la barre transversale est réalisée sous la forme soit d'un profilé à double T, d'un profilé creux ou d'un profilé en U ou V, sur les extrémités duquel sont formées d'un seul tenant des chambres creuses ou des épaississements.

2. Essieu arrière pour véhicule automobile selon la revendication 1, caractérisé en ce que la structure d'extrusion présente un agencement linéaire des précipitations primaires du type AlMn, AlMnFe et AlFe.

3. Essieu arrière pour véhicule automobile selon l'une des revendications précédentes, caractérisé en ce que le profilé d'extrusion en aluminium est constitué d'un alliage d'aluminium ayant la composition suivante :
magnésium 0,4 - 1,4 %
silicium 0,4 - 1,5 %
cuivre 0,01 - 1,0 %
fer 0,1 - 0,8 %
manganèse 0,01 - 1,0 %
chrome, max. 0,3 %
zirconium max. 0,3 %,
le reste étant de l'aluminium et des impuretés issues de la fabrication.

4. Essieu arrière pour véhicule automobile selon l'une des revendications précédentes, caractérisé en ce que la section transversale du profilé de la barre transversale (3), dans la zone de transition s'étendant vis-à-vis du bras oscillant longitudinal (2), est réalisée sous la forme d'un profilé creux fermé tandis que, dans les zones restantes, elle est constituée d'une section de profilé ouverte, fabriquée par un procédé d'extrusion.

5. Essieu arrière pour véhicule automobile selon l'une des revendications précédentes, caractérisé en ce que le profilé creux fermé de la barre transversale (3) est fendu dans la direction longitudinale, la largeur de la fente étant comprise entre 0,1 - 1 mm.

6. Essieu arrière pour véhicule automobile selon l'une des revendications précédentes, caractérisé en ce que les surfaces de toit du profit à double T constituant la barre transversale (3) sont nervurées ou ondulées, un élargissement étant prévu par pressage par plaque des ondes ou ondulations, dans la zone de joint vis-à-vis du bras oscillant longitudinal, élargissement soudé à des nervures longitudinales, s'étendant parallèlement à celui-ci, d'un bras oscillant longitudinal réalisé sous la forme de profilé tubulaire.

7. Essieu arrière pour véhicule automobile selon l'une des revendications précédentes, caractérisé en ce que le bras articulé longitudinal est réalisé sous forme de pièce moulée, avec une structure de profité, s'ouvrant vers la barre transversale et dans laquelle la barre transversale est emboîtée et soudée.

8. Essieu arrière pour véhicule automobile selon l'une des revendications précédentes, caractérisé en ce que le bras oscillant longitudinal est constitué d'un profité tubulaire coudé à 90°, à une extrémité duquel la barre transversale est soudée avec chevauchement et sur le coude extérieur duquel un profité d'extrusion ouvert sur un coté est soudé dans le prolongement du profilé tubulaire arqué libre.

9. Essieu arrière pour véhicule automobile selon l'une des revendications précédentes, caractérisé en ce que la barre transversale et le bras oscillant longitudinal sont constitués de tubes emboîtés les uns dans les autres, la barre transversale étant fendue, au moins par tronçons et, dans le prolongement de l'extrémité de coude libre, les bras longitudinaux oscillants sont constitués par un tube rapporté par soudage, ayant une zone de joint guidée obliquement par rapport à l'axe de tube.

10. Procédé de fabrication d'un essieu arrière pour véhicule automobile du type à bras articulé composite, en utilisant des bras oscillants transversaux et longitudinaux selon l'une des revendications précédentes, caractérisé en ce que le bras oscillant longitudinal (2) est enfiché à travers un support transversal percé à son extrémité transversalement par rapport à l'axe longitudinal et est relié, avec ajustement de forme et liaison de force, par hydroformage.

11. Procédé selon la revendication précédente, caractérisé en ce que la barre transversale est élargie à ses extrémités d'abord par hydroformage et est dotée, dans le tronçon élargi, d'un évidement rectangulaire, en ce que le bras oscillant longitudinal (2) est emboîté dans l'évidement rectangulaire et relié à la barre transversale au moyen de liaisons à écrasement.

12. Procédé selon l'une des revendications précédentes, caractérisé en ce que, aux deux points d'extrémité de chaque bras oscillant longitudinal, sont formées des empreintes de sections transversales, par hydroformage, en vue de constituer une plaque support de roue et de supporter un joint universel en caoutchouc.

13. Procédé selon l'une des revendications précédentes, caractérisé en ce que les zones de liaison sont produites au moyen d'adhésif et/ou par des points de clinchage.

14. Procédé selon l'une des revendications précédentes, caractérisé en ce que le support transversal est fendu à l'aide d'un outil de fraisage, dans le but de déplacer le centre de poussée et de régler la rigidité en torsion.

15. Procédé selon l'une des revendications précédentes, caractérisé en ce que des douilles retroussées sont formées dans les parois du support, pour la fixation de paliers ou de points de rotation.

16. Procédé selon l'une des revendications précédentes, caractérisé en ce que des arbres creux sont introduits dans les douilles retroussées et fixés par hydroformage.

17. Procédé selon l'une des revendications précédentes, caractérisé en ce que, sur les extrémités fendues du support transversal, sont disposés des profilés creux fermés, dans le but de déplacer le centre de poussée et d'influer sur la rigidité en torsion.

18. Procédé selon l'une des revendications précédentes, caractérisé en ce que les cordons de soudure sont réalisés sous forme de cordons bord à bord et avec une sécurité utilisant un bain, les appuis du bain de soudage s'étendant dans la direction de la sollicitation principale et étant formés d'un seul, tenant par extrusion sur l'un des deux profils.

19. Procédé selon l'une des revendications précédentes, caractérisé en ce que le profilé creux fermé de la barre transversale (3) est fendu par un usinage mécanique et est simultanément comprimé aux arêtes.

20. Procédé selon l'une des revendications précédentes, caractérisé en ce que les extrémités d'un profité en U (42), se transformant en la barre transversale (3), sont ouvertes par repli vers l'extérieur après enlèvement d'une pièce de liaison (45) et sont insérées, avec les appuis de bains de soudure (44.1, 44.2) intégrés, dans un profilé de bras oscillant longitudinal (2) en forme de U, et soudées.

21. Procédé selon l'une des revendications précédentes, caractérisé en ce que, dans le vide constitué entre les extrémités ouvertes par pliage vers l'extérieur entre les extrémités (42.1, 42.2) ouvertes par pliage, un profilé formant gousset (46), ou bien une tôle de forme correspondante, est inséré et est soudé thermiquement au profilé voisin.

22. Procédé selon l'une des revendications précédentes, caractérisé en ce qu'aux extrémités ouvertes de la barre transversale (3) sont constituées des chambres creuses (43.1 et 43.2), un déplacement du centre de poussée étant effectué par déplacement ou modification de la section transversale des chambres creuses.
